# EUROPEAN PATENT APPLICATION

(11) **EP 1 619 472 A2**
(43) Date of publication of application: **25.01.2006**
(21) Application number: 05254440.0
(22) Date of filing: 15.07.2005
(51) Int. Cl.: G01C 19/56

(54) **Angular velocity sensor**

(30) Priority: 21.07.2004 JP 2004212943
(71) Applicant: Fujitsu Media Devices Limited, Yokohama-shi, Kanagawa 222-0033 (JP)
(72) Inventor: Tanaka, Hiroshi, c/o Fujitsu Media Devices Limited, Yokohama-shi Kanagawa 222-0033 (JP); Yachi, Masanori, c/o Fujitsu Media Devices Limited, Yokohama-shi Kanagawa 222-0033 (JP); Ono, Masaaki, c/o Fujitsu Media Devices Limited, Yokohama-shi Kanagawa 222-0033 (JP)
(74) Representative: Stebbing, Timothy Charles

(57) **Abstract**

An angular velocity sensor is manufactured by simple method and has reduced size and height. It includes a base portion (1) formed by a piezoelectric single crystal and having a length in the Y-axis direction and a thickness in Z-axis direction; and four beams (2a-2d) each extending in the Y-axis direction perpendicular to the X- and Z-axis directions, that are arranged side by side in the X-axis direction and formed by the same piezoelectric single crystal as the base portion. The four beams (2a-2d) are grouped in two pairs (2a, 2b; 2c, 2d), with one of each pair (2a, 2d) used as a drive beam and the other (2b, 2c) as a counterbalance. The drive beams (2a, 2d) are provided with drive electrodes (3a1, 3a2; 3b1, 3b2) adapted to oscillate the beams in the X-axis direction and Y-axis sensing electrodes adapted to detect the rotation angle applied around the Y-axis, and the other beams serving as counterbalances are provided with X-axis sensing electrodes adapted to detect the rotation angle applied around the X-axis.

## Description

The present invention relates generally to an angular velocity sensor, and, more particularly, to a multi-axis angular velocity sensor using a quadruped or H-shaped tuning fork.

Various types have been proposed so far as a piezoelectric angular velocity sensor. One of such types is configured to have a protrusion at the tip portion of a tripod tuning fork type oscillator so as to enable detection of the angular velocities of a plurality of axes (see, e.g., Japanese Patent Application Laid-Open Publication No. 2002-213963).

On the other hand, another type is configured to have a weight portion, adapted to detect angular velocities, formed at the center of a disk-shaped piezoelectric element so as to detect the angular velocities of a plurality of axes (see, e.g. Japanese Patent Application Laid-Open Publication No. 1996-94661).

Still another type is known that is configured to have four oscillating arms formed by a common supporting portion, with two inner or outer oscillating arms used as drive arms and the other two as sensing arms (see, e. g., Japanese Patent Application Laid-Open Publication No. 1996-278142).

However, the angular velocity sensor in the first conventional example, having a tripod tuning fork structure with a protrusion, lacks simplicity in manufacture, and if the sensor is rendered multiaxial to detect the angular velocities of the respective axes, the electrode area becomes smaller. This likely leads to increased impedance.

On the other hand, the configuration in the second conventional example has a drawback in terms of manufacturing cost because of the structural complexity involved in forming the weight portion on the disk-shaped piezoelectric element.

Further, the third conventional example is designed to detect the angular velocity of only a single axis and cannot detect the angular velocities of a plurality of axes.

In light of the above, it is desired to provide an angular velocity sensor that can be manufactured by a simple method and reduced in size and height and that can detect the angular velocities of a plurality of axes with a single element.

An angular velocity sensor in accordance with the present invention is characterized in that it has a base portion formed by a piezoelectric single crystal and having a length in the Y-axis direction and a thickness in the Z-axis direction, and four beams each extending along the Y-axis perpendicular to the X- and Z-axis directions and being arranged side by side in the X-axis direction and formed by the piezoelectric single crystal integrally with the base portion, that the four beams are grouped in two pairs with one in each pair used as a drive beam and the other a counterbalance, that the drive beams are provided with drive electrodes adapted to oscillate the beams in the X-axis direction and Y-axis sensing electrodes adapted to detect the rotation angle applied around the Y-axis, and that the other beams serving as counterbalances are provided with X-axis sensing electrodes adapted to detect the rotation angle applied around the X-axis.

An embodiment of the angular velocity sensor in accordance with the present invention is characterized in that the drive electrodes are electrodes formed on both surfaces of the drive beams perpendicular to the Z-axis with a drive signal applied between the drive electrodes, that the Y-axis sensing electrodes are electrodes formed on the surfaces of the drive beams perpendicular to the Z-axis separately from the drive electrodes and electrodes formed on the surfaces of the drive beams perpendicular to the X-axis so that outputs between these electrodes are detected as the rotation angle applied around the Y-axis, and that the X-axis sensing electrodes are electrodes formed on the surfaces of the other beams serving as counterbalances perpendicular to the Z-axis and electrodes formed on both surfaces thereof perpendicular to the X-axis so that outputs between these electrodes are detected as the rotation angle applied around the X-axis.

Another embodiment of the angular velocity sensor in accordance with the present invention has, in addition to the features of the above embodiment, Z-axis sensing electrodes formed on the both surfaces of the other beams serving as counterbalances perpendicular to the Z-axis separately from the X-axis sensing electrodes formed on the both surfaces of the other beams serving as counterbalances perpendicular to the Z-axis so that outputs between these electrodes are detected as the rotation angle applied around the Z-axis.

Preferably, in any of the above embodiments, the four beams are formed on one side of the base portion relative to the Z-axis direction to form a comb shape.

Alternatively, in any of the above embodiments, the two pairs of the four beams are formed so as to face each other in the Z-axis direction with the base portion therebetween to form an H shape.

The features of the present invention will become more apparent from the embodiments which will be described below with reference to the drawings.

According to the present invention there is provided an angular velocity sensor that is simple in structure, easy to manufacture, compact and short to allow mounting in a flat position, and capable of detecting the angular velocities of a plurality of axes with a single element.

The above and other features and advantages of the present invention will become more apparent from the following detailed description when taken in conjunction with the accompanying drawings, in which:
Fig. 1A is a view illustrating the conceptual configuration of a quadruped tuning fork type oscillator of a first embodiment according to the present invention;
Fig. 1B is a cross-sectional view along line a-a' of Fig: 1A illustrating the connection of drive and sensing electrodes;
Fig. 2A is an explanatory view of the condition in an Fz mode in the first embodiment;
Fig. 2B is a cross-sectional view along line a-a' of Fig. 2A illustrating the connection of the drive and sensing electrodes;
Fig. 3A is an explanatory view of the condition in an Fz' mode in the first embodiment;
Fig. 3B is a cross-sectional view along line a-a' of Fig. 3A illustrating the connection of the drive and sensing electrodes;
Fig. 4A is a view illustrating the conceptual configuration of the quadruped tuning fork type oscillator of a second embodiment according to the present invention;
Fig. 4B is a cross-sectional view along line a-a' of Fig. 4A illustrating the connection of the drive and sensing electrodes;
Fig. 5A is an explanatory view of the condition in the Fz mode in the second embodiment;
Fig. 5B is a cross-sectional view along line a-a' of Fig. 5A illustrating the connection of the drive and sensing electrodes;
Fig. 6A is an explanatory view of the condition in the Fz' mode in the second embodiment;
Fig. 6B is a cross-sectional view along line a-a' of Fig. 6A illustrating the connection of the drive and sensing electrodes;
Fig. 7A is a view illustrating the conceptual configuration of the quadruped tuning fork type oscillator of a third embodiment according to the present invention;
Fig. 7B is a cross-sectional view along line a-a' of Fig. 7A illustrating the connection of the drive and sensing electrodes;
Fig. 8A is an explanatory view of the condition in the Fz mode in the third embodiment;
Fig. 8B is a cross-sectional view along line a-a' of Fig. 8A illustrating the connection of the drive and sensing electrodes;
Fig. 9A is an explanatory view of the condition in the Fz' mode in the third embodiment;
Fig. 9B is a cross-sectional view along line a-a' of Fig. 9A illustrating the connection of the drive and sensing electrodes;
Fig. 10A is a view illustrating the conceptual configuration of the quadruped tuning fork type oscillator of a fourth embodiment according to the present invention;
Fig. 10B is a cross-sectional view along line a-a' of Fig. 10A illustrating the connection of the drive and sensing electrodes;
Fig. 11A is an explanatory view of the condition in the Fz mode in the fourth embodiment;
Fig. 11B is a cross-sectional view along line a-a' of Fig. 11A illustrating the connection of the drive and sensing electrodes;
Fig. 12A is an explanatory view of the condition in the Fz' mode in the fourth embodiment;
Fig. 12B is a cross-sectional view along line a-a' of Fig. 12A illustrating the connection of the drive and sensing electrodes;
Fig. 13A is a view illustrating the conceptual configuration of an H-shaped tuning fork type oscillator of a fifth embodiment according to the present invention;
Fig. 13B is a cross-sectional view along lines a-a' and b-b' of Fig. 13A illustrating the connection of the drive and sensing electrodes;
Fig. 14A is an explanatory view of the condition in the Fz mode in the fifth embodiment;
Fig. 14B is a cross-sectional view along lines a-a' and b-b' of Fig. 14A illustrating the connection of the drive and sensing electrodes;
Fig. 15A is an explanatory view of the condition in the Fz' mode in the fifth embodiment;
Fig. 15B is a cross-sectional view along lines a-a' and b-b' of Fig. 15A illustrating the connection of the drive and sensing electrodes;
Fig. 16A is a view illustrating the conceptual configuration of the H-shaped tuning fork type oscillator of a sixth embodiment according to the present invention;
Fig. 16B is a cross-sectional view along lines a-a' and b-b' of Fig. 16A illustrating the connection of the drive and sensing electrodes;
Fig. 17A is an explanatory view of the condition in the Fz mode in the sixth embodiment;
Fig. 17B is a cross-sectional view along lines a-a' and b-b' of Fig. 17A illustrating the connection of the drive and sensing electrodes;
Fig. 18A is an explanatory view of the condition in the Fz' mode in the sixth embodiment;
Fig. 18B is a cross-sectional view along lines a-a' and b-b' of Fig. 18A illustrating the connection of the drive and sensing electrodes; and
Fig. 19 is a view illustrating how to install the angular velocity sensor according to the present invention.

The embodiments of the present invention will now be described with reference to the accompanying drawings. It is to be noted that the embodiments are provided only for the purposes of understanding the present invention and that the technical scope of the present invention is not limited thereto.

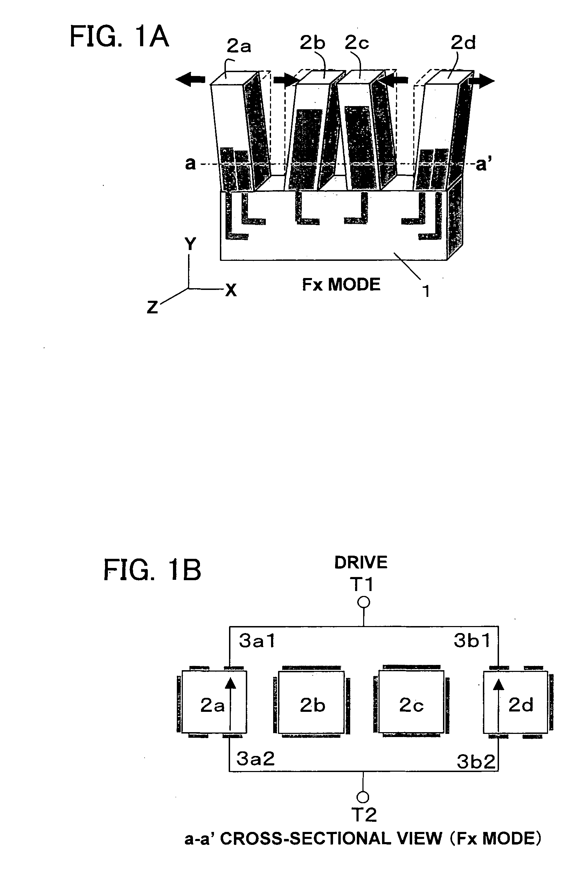

Figs. 1A to 3B are views illustrating a first embodiment of the present invention. Fig. 1A is a view illustrating the conceptual configuration of a quadruped tuning fork type oscillator, whereas Fig. 1B is a cross-sectional view along line a-a' of Fig. 1A illustrating the connection of drive and sensing electrodes.

As the common configuration, embodiments to be described below all have a base portion 1 cut out from a piezoelectric single crystal and having a length in the Y-axis direction and a thickness in the Z-axis direction, and four beams 2a, 2b, 2c and 2d formed by the piezoelectric single crystal integrally with the base portion 1 and each having a length in the Y-axis direction vertical (i.e. perpendicular) to the X- and Z-axes, and arranged side by side in the X-axis direction.

Single crystal elements with a large electromechanical coupling coefficient are preferred for use as the piezoelectric single crystal from the viewpoint of high sensitivity and size reduction, and lithium niobate (LiNbO₃), lithium tantalate (LiTaO₃), potassium niobate (KNbO₃) and quartz (SiO₂) are among the materials that can be used.

In the first embodiment, of the four beams, the beams 2a and 2b are paired, and the beams 2c and 2d are paired, with one in each pair or the beams 2a and 2d used as drive beams and the other or the beams 2b and 2c as counterbalances, as illustrated in Fig. 1B.

The beam 2a has drive electrodes 3a1 and 3a2 formed on the surfaces vertical to the Z-axis direction, whereas the beam 2d has drive electrodes 3b1 and 3b2 formed on the surfaces vertical to the Z-axis direction. A drive signal is supplied between the drive electrodes 3a1 and 3a2 and between the drive electrodes 3b1 and 3b2 from terminals T1 and T2.

This causes the drive beams 2a and 2d to be excited in the X-axis direction, and the counterbalance beams 2b and 2c to oscillate in the opposite direction in the X-axis direction, as illustrated in Fig. 1A. This mode is defined as an Fx mode.

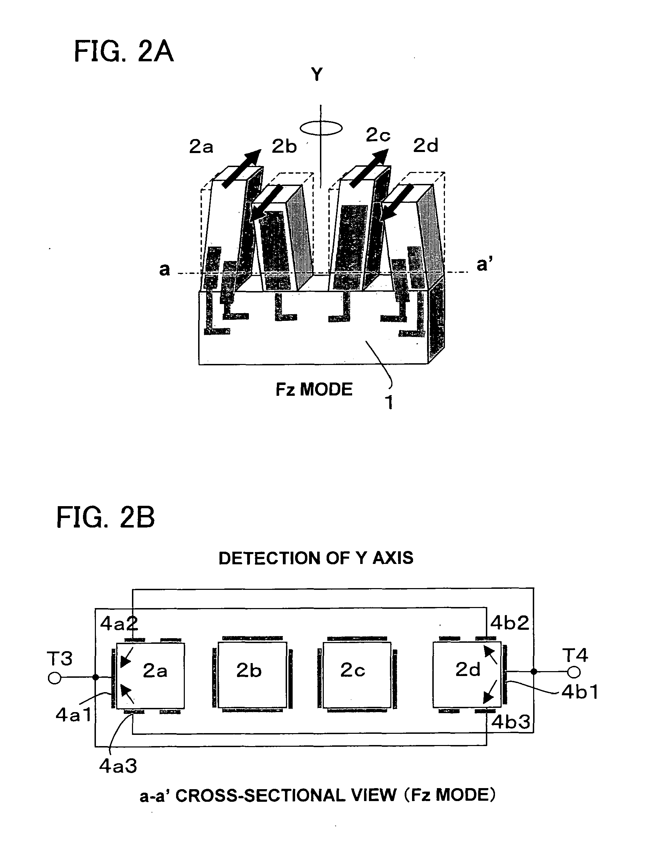

Figs. 2A and 2B are explanatory views of application of a rotational force around the Y-axis in the Fx mode illustrated in Figs. 1A and 1B. In Fig. 2A, if a rotational force is applied around the Y-axis in the Fx mode, the drive beams 2a and 2d and the counterbalance beams 2b and 2c are displaced in the directions indicated by the arrows, that is, in opposite directions in the Z-axis direction, due to Coriolis force. This condition is defined as an Fz mode. Therefore, the detection of the displacements in the Fz mode allows detection of the rotation angle applied around the Y-axis.

To detect the displacements of the drive beams 2a and 2d in the Z-axis direction in the Fz mode, sensing electrodes are connected in the cross-sectional view along line a-a' of Fig. 2A as illustrated in Fig. 2B.

In Fig. 2B, electrodes 4a1 and 4b1 are formed on the surfaces of the drive beams 2a, 2d perpendicular to the X-axis, and electrodes 4a2, 4a3, 4b2 and 4b3 on the surfaces of the drive beams 2a, 2d perpendicular to the Z-axis. If the outputs between the electrodes 4a1 and 4a2, and 4a1 and 4a3 and those between the electrodes 4b1 and 4b2, and 4b1 and 4b3 are found from terminals T3 and T4, the displacements in the Fz mode can be detected.

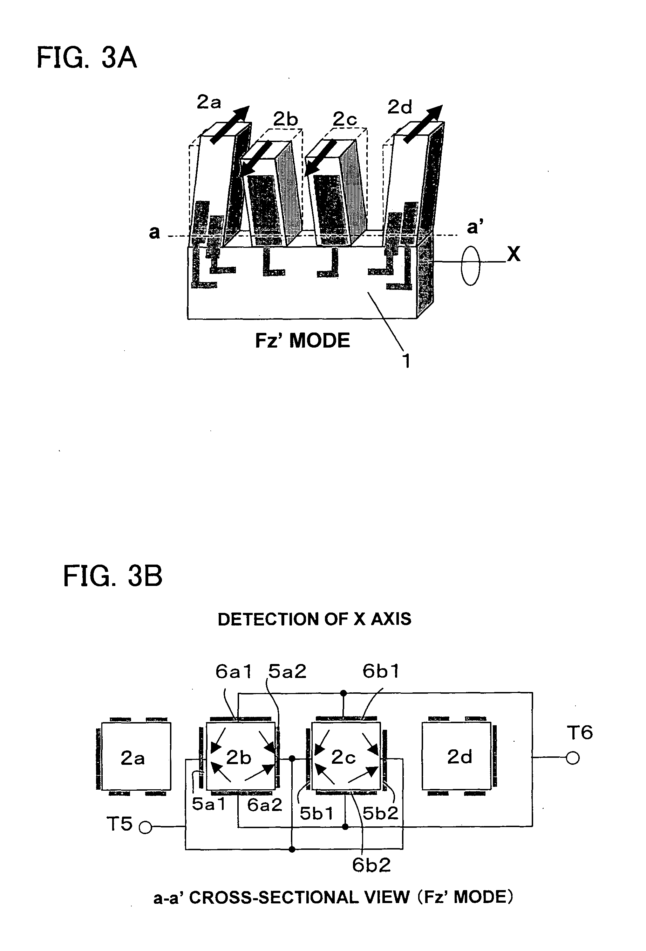

Similarly, Figs. 3A and 3B are explanatory views of application of a rotational force around the X-axis in the Fx mode illustrated in Figs. 1A and 1B. In Fig. 3A, when a rotational force is applied around the X-axis in the Fx mode, the drive beams 2a and 2d and the counterbalance beams 2b and 2c are displaced in the directions indicated by the arrows, that is, in opposite directions in the Z-axis direction, due to Corioli's force. This condition is defined as an Fz' mode. Therefore, the detection of the displacements in the Fz' mode allows detection of the rotation angle applied around the X-axis.

To detect the displacements of the counterbalance beams 2b and 2c in the Z-axis direction in the Fz' mode, the sensing electrodes are connected in the cross-sectional view along line a-a' of Fig. 3A as illustrated in Fig. 3B.

In Fig. 3B, electrodes 5a1, 5a2, 5b1 and 5b2 are formed on the surfaces of the counterbalance beams 2b and 2c vertical to the X-axis, and electrodes 6a1, 6a2, 6b1 and 6b2 on the surfaces of the counterbalance beams 2b and 2c vertical to the Z-axis. If the outputs between the electrodes 5a1 and 6a1, and 5a1 and 6a2 and those between the electrodes 5b2 and 6b1, and 5b2 and 6b2 are found from terminals T5 and T6, the displacements in the Fz' mode can be detected.

As described above, the first embodiment allows detection of the rotation angles of two axes or the Y- and X-axes, and therefore, the angular velocities of these axes in the Fz and Fz' modes with a single element.

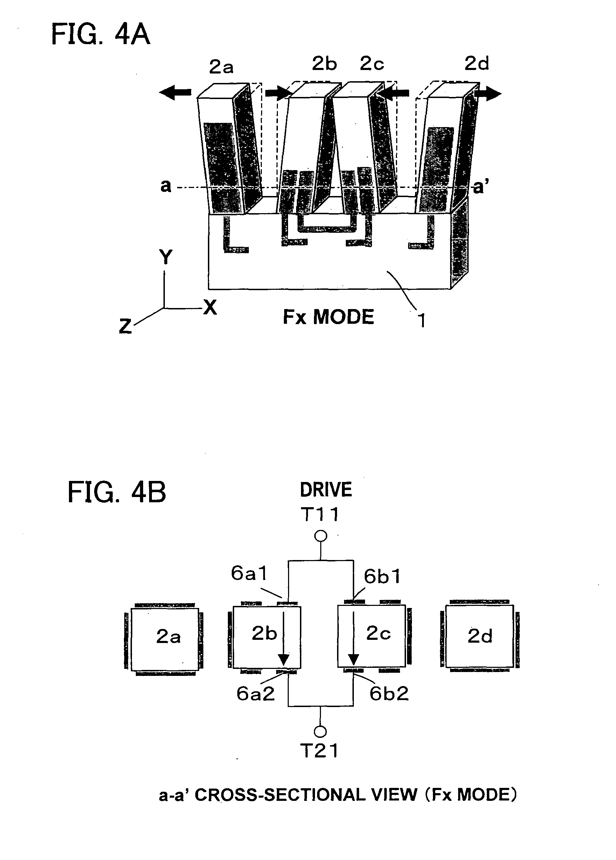

Next, Figs. 4A to 6B are views illustrating a second embodiment of the present invention. The second embodiment is identical to the first embodiment in that it is configured with the base portion 1 and the four beams 2a, 2b, 2c and 2d formed integrally with the base portion 1.

Fig. 4A is a view illustrating the conceptual configuration of the quadruped tuning fork type oscillator, whereas Fig. 4B is a cross-sectional view along line a-a' of Fig. 4A illustrating the connection of the drive electrodes.

In the second embodiment, of the four beams, the beams 2a and 2b are paired, and the beams 2c and 2d are paired, with one in each pair or the beams 2b and 2c used as the drive beams and the other or the beams 2a and 2d as the counterbalances, as illustrated in Fig. 4B.

The beam 2b has drive electrodes 6a1 and 6a2 formed on sides perpendicular to the Z-axis direction, whereas the beam 2c has drive electrodes 6b1 and 6b2 formed on sides perpendicular to the Z-axis direction. A drive signal is supplied between the drive electrodes 6a1 and 6a2 and between the drive electrodes 6b1 and 6b2 from terminals T11 and T21.

This causes the drive beams 2b and 2c to be excited in the X-axis direction, and the counterbalance beams 2a and 2d to oscillate in the opposite direction in the X-axis direction, as illustrated in Fig. 4A. This mode is defined as the Fx mode.

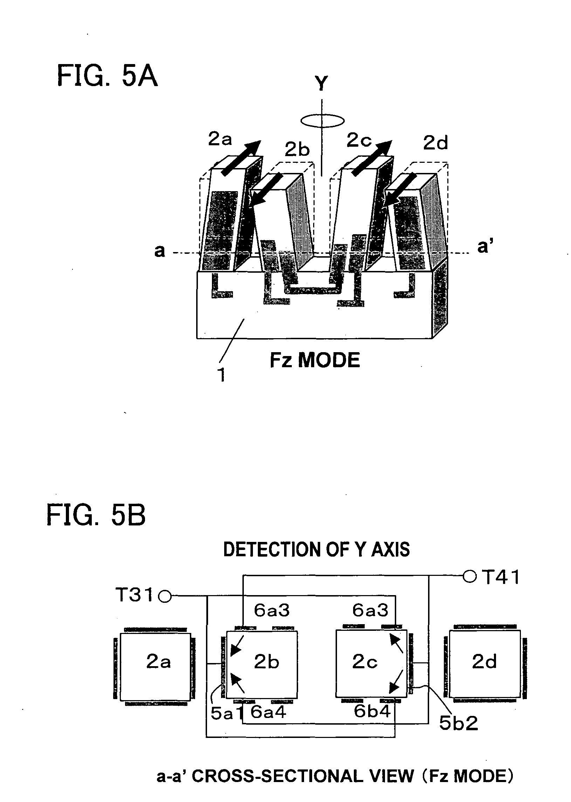

Figs. 5A and 5B are explanatory views of application of a rotational force around the Y-axis in the Fx mode illustrated in Figs. 4A and 4B. In Fig. 5A, if a rotational force is applied around the Y-axis in the Fx mode, the drive beams 2b and 2c and the counterbalance beams 2a and 2d are displaced in the directions indicated by the arrows, that is, in opposite directions in the Z-axis direction, due to Coriolis force. This condition, identical to that illustrated in Fig. 2A, is the Fz mode. Therefore, the detection of the displacements in the Fz mode allows detection of the rotation angle applied around the Y-axis.

To detect the displacements of the drive beams 2b and 2c in the Z-axis direction in the Fz mode, the sensing electrodes are connected in the cross-sectional view along line a-a' of Fig. 5A as illustrated in Fig. 5B.

In Fig. 5B, the electrodes 5a1 and 5b1 are formed on the surfaces of the drive beams 2b and 2c vertical to the X-axis, and electrodes 6a3, 6a4, 6b3 and 6b4 on the surfaces of the drive beams 2b and 2c vertical to the Z-axis. If the outputs between the electrodes 5a1 and 6a3, and 5a1 and 6a4 and those between the electrodes 5b1 and 6b3, and 5b1 and 6b4 are found from terminals T31 and T41, the displacements in the Fz mode can be detected.

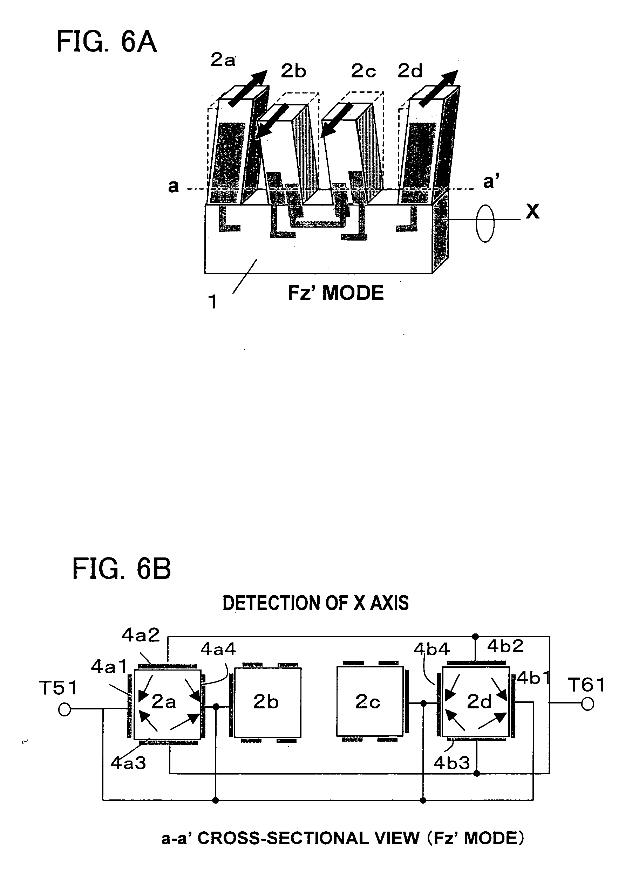

Similarly, Figs. 6A and 6B are explanatory views of application of a rotational force around the X-axis in the Fx mode illustrated in Figs. 4A and 4B. In Fig. 6A, when a rotational force is applied around the X-axis in the Fx mode, the drive beams 2b and 2c and the counterbalance beams 2a and 2d are displaced in the directions indicated by the arrows, that is; in opposite directions in the Z-axis direction, due to Coriolis force. This condition, identical to that illustrated in Fig. 3A, is the Fz' mode. Therefore, the detection of the displacements in the Fz' mode allows detection of the rotation angle applied around the X-axis.

To detect the displacements of the counterbalance beams 2a and 2d in the Z-axis direction in the Fz' mode, the sensing electrodes are connected in the cross-sectional view along line a-a' of Fig. 6A as illustrated in Fig. 6B.

In Fig. 6B, electrodes 4a1, 4a4, 4b1 and 4b4 are formed on the surfaces of the counterbalance beams 2a and 2d vertical to the X-axis, and electrodes 4a2, 4a3, 4b2 and 4b3 on the surfaces of the counterbalance beams 2a and 2d vertical to the Z-axis. If the outputs between the group of the electrodes 4a1, 4a4, 4b1 and 4b4 and the group of the electrodes 4a2, 4a3, 4b2 and 4b3 are found from terminals T51 and T61, the displacements in the Fz' mode can be detected.

As described above, the second embodiment allows detection of the rotation angles of two axes or the Y- and X-axes, and therefore, the angular velocities of these axes in the Fz and Fz' modes with a single element, as with the first embodiment.

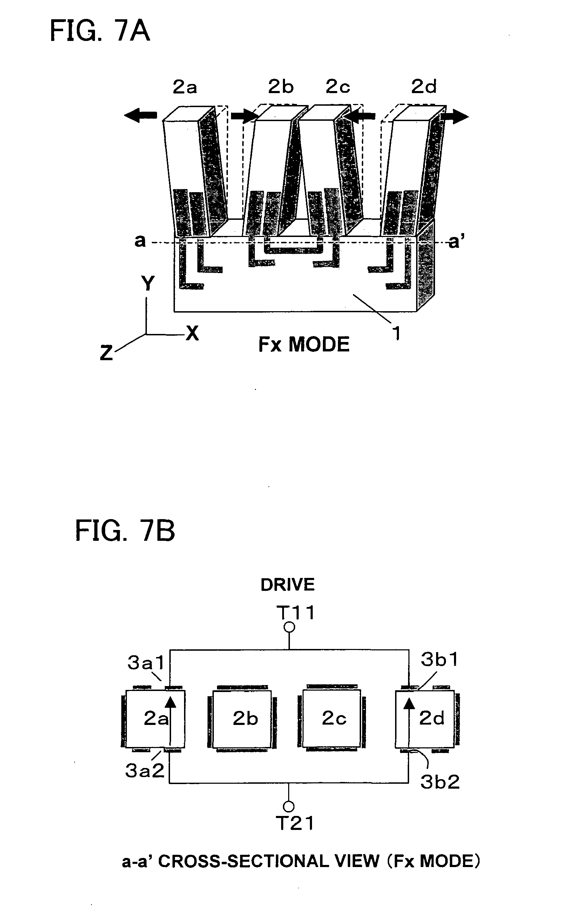

Next, description will be given of a configuration example operable to detect the angular velocities of three axes with a single element as a third embodiment with reference to Figs. 7A to 9B.

The third embodiment is identical to the first and second embodiments in that it is configured with the base portion 1 and the four beams 2a, 2b, 2c and 2d formed integrally with the base portion 1.

Fig. 7A is a view illustrating the conceptual configuration of the quadruped tuning fork type oscillator, whereas Fig. 7B is a cross-sectional view along line a-a' of Fig. 7A illustrating the connection of the drive electrodes.

In the third embodiment, of the four beams, the beams 2a and 2b are paired, and the beams 2c and 2d are paired, with one in each pair or the beams 2a and 2d used as the drive beams and the other or the beams 2b and 2c as the counterbalances, as illustrated in Fig. 7B.

The beam 2a has the drive electrodes 3a1 and 3a2 formed on the surfaces vertical to the Z-axis direction, whereas the beam 2d has the drive electrodes 3b1 and 3b2 formed on the surfaces vertical to the Z-axis direction. A drive signal is supplied between the drive electrodes 3a1 and 3a2 and between the drive electrodes 3b1 and 3b2 from the terminals T11 and T21.

This causes the drive beams 2a and 2d to be excited in the X-axis direction, and the counterbalance beams 2b and 2c to oscillate in the opposite direction in the X-axis direction, as illustrated in Fig. 7A. This mode is the Fx mode.

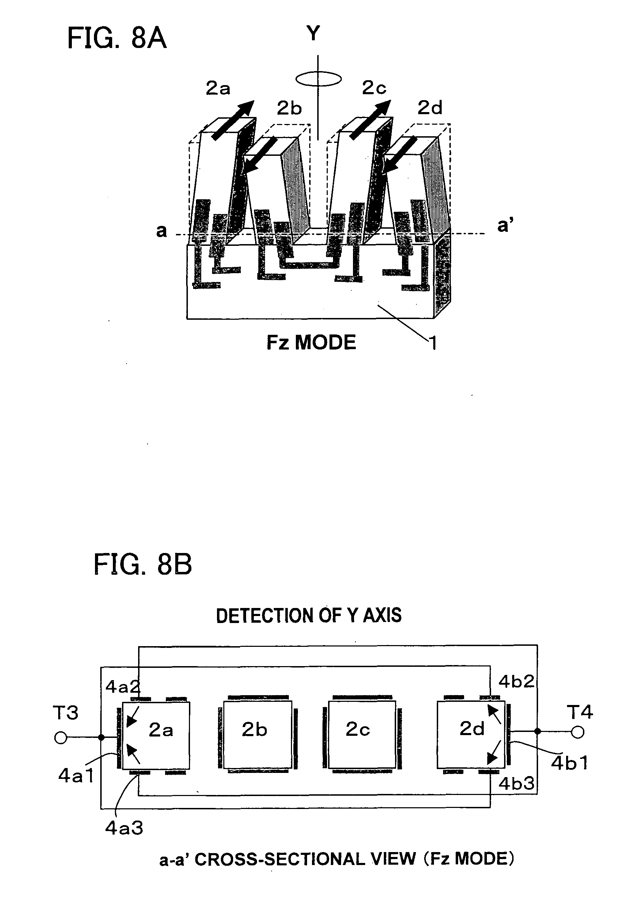

Figs. 8A and 8B are explanatory views of application of a rotational force around the Y-axis in the Fx mode illustrated in Figs. 7A and 7B. In Fig. 8A, if a rotational force is applied around the Y-axis in the Fx mode, the drive beams 2a and 2d and the counterbalance beams 2b and 2c are displaced in the directions indicated by the arrows, that is, in opposite directions in the Z-axis direction, due to Coriolis force. This condition, identical to that illustrated in Fig. 2A, is the Fz mode. Therefore, the detection of the displacements in the Fz mode allows detection of the rotation angle applied around the Y-axis.

To detect the displacements of the drive beams 2a and 2d in the Z-axis direction in the Fz mode, the sensing electrodes are connected in the cross-sectional view along line a-a' of Fig. 8A as illustrated in Fig. 8B.

In Fig. 8B, the electrodes 4a1 and 4b1 are formed on the surfaces of the drive beams 2a and 2d vertical to the X-axis, and the electrodes 4a2, 4a3, 4b2 and 4b3 on the surfaces of the drive beams 2a and 2d vertical to the Z-axis. If the outputs between the electrodes 4al and 4a2, and 4al and 4a3 and those between the electrodes 4b1 and 4b2, and 4b1 and 4b3 are found from the terminals T3 and T4, the displacements in the Fz mode can be detected.

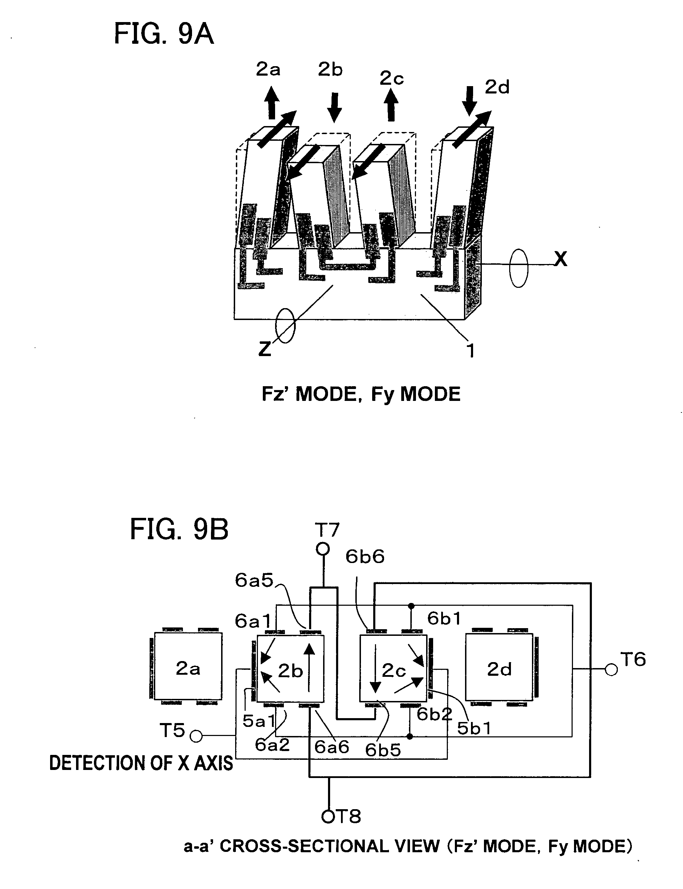

Similarly, Figs. 9A and 9B are explanatory views of application of a rotational force around the X-axis in the Fx mode illustrated in Figs. 7A and 7B. In Fig. 9A, when a rotational force is applied around the X-axis in the Fx mode, the drive beams 2a and 2d and the counterbalance beams 2b and 2c are displaced in the directions indicated by the arrows, that is, in opposite directions in the Z-axis direction, due to Coriolis force. This condition, identical to that illustrated in Fig. 3A, is the Fz' mode. Therefore, the detection of the displacements in the Fz' mode allows detection of the rotation angle applied around the X-axis.

To detect the displacements of the counterbalance beams 2b and 2c in the Z-axis direction in the Fz' mode, the sensing electrodes are connected in the cross-sectional view along line a-a' of Fig. 9A as illustrated in Fig. 9B.

In Fig. 9B, the electrodes 5a1 and 5b1 are formed on the surfaces of the counterbalance beams 2b and 2c vertical to the X-axis, and the electrodes 6a1, 6a2, 6b1 and 6b2 on the surfaces of the counterbalance beams 2b and 2c vertical to the Z-axis. If the outputs between the electrodes 5a1 and 6a1, and 5a1 and 6a2 and those between the electrodes 5b1 and 6b1, and 5b1 and 6b2 are found from the terminals T5 and T6, the displacements in the Fz' mode can be detected.

Further in Fig. 9A, when a rotational force is applied around the Z-axis, the drive beams 2a and 2d and the counterbalance beams 2b and 2c are displaced in the directions indicated by the up and down arrows, that is, in opposite directions in the Y-axis direction, due to Coriolis force. This condition is defined as an Fy mode.

Therefore, the detection of the displacements in the Fy mode allows detection of the rotation angle applied around the Z-axis.

To detect the displacements of the counterbalance beams 2b and 2c in the Y-axis direction in the Fy mode, the sensing electrodes are connected in the cross-sectional view along line a-a' of Fig. 9A as illustrated in Fig. 9B.

In Fig. 9B, electrodes 6a5, 6a6, 6b5 and 6b6 are further formed on the surfaces of the counterbalance beams 2b and 2c vertical to the Z-axis. If the output between the electrodes 6a5 and 6a6 and that between the electrodes 6b5 and 6b6 are found from terminals T7 and T8, the displacements in the Fy mode can be detected.

As described above, the third embodiment allows detection of the rotation angles of three axes or the Y-, X- and Z-axes, and therefore, the angular velocities of these axes in the Fz, Fz' and Fy modes with a single element.

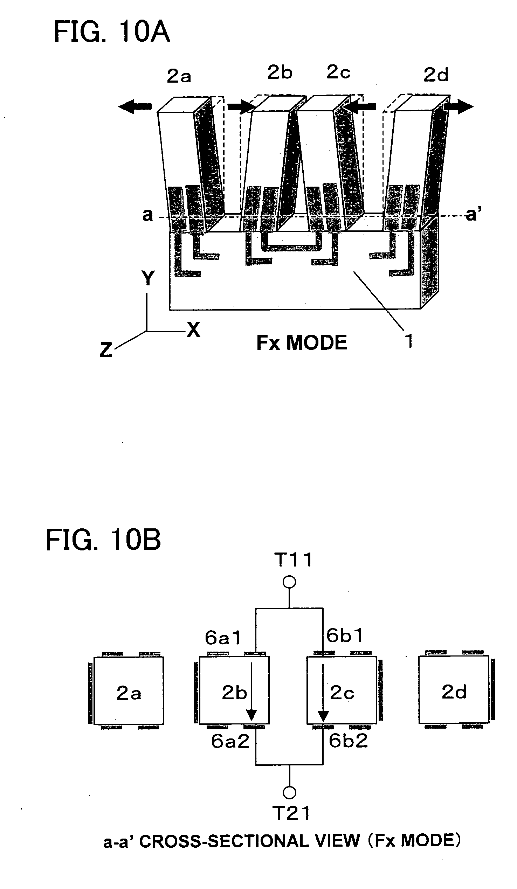

Further, a modification of the third embodiment, operable to detect the angular velocities of three axes with a single element, is illustrated as a fourth embodiment in Figs. 10A to 12B. In contrast to the third embodiment, the fourth embodiment uses the beams 2b and 2c rather than the beams 2a and 2d as the drive beams, and therefore, the beams 2a and 2d as the counterbalance beams.

In Fig. 10A, the fourth embodiment is identical to the first, second and third embodiments in that it is configured with the base portion 1 and the four beams 2a, 2b, 2c and 2d formed integrally with the base portion 1.

Fig. 10A is a view illustrating the conceptual configuration of a quadruped tuning fork type oscillator, whereas Fig. 10B is a cross-sectional view along line a-a' of Fig. 10A illustrating the connection of the drive electrodes.

In the fourth embodiment, of the four beams, the beams 2a and 2b are paired, and the beams 2c and 2d are paired, with one in each pair or the beams 2b and 2c used as the drive beams and the other or the beams 2a and 2d as counterbalances, as illustrated in Fig. 10B.

The beam 2b has the drive electrodes 6a1 and 6a2 formed on the surfaces vertical to the Z-axis direction, whereas the beam 2c has drive electrodes 6b1 and 6b2 formed on the surfaces vertical to the Z-axis direction. A drive signal is supplied between the drive electrodes 6a1 and 6a2 and between the drive electrodes 6b1 and 6b2 from the terminals T11 and T21.

This causes the drive beams 2b and 2c to be excited in the X-axis direction, and the counterbalance beams 2a and 2d to oscillate in the opposite direction in the X-axis direction, as illustrated in Fig. 10A. This mode is the Fx mode.

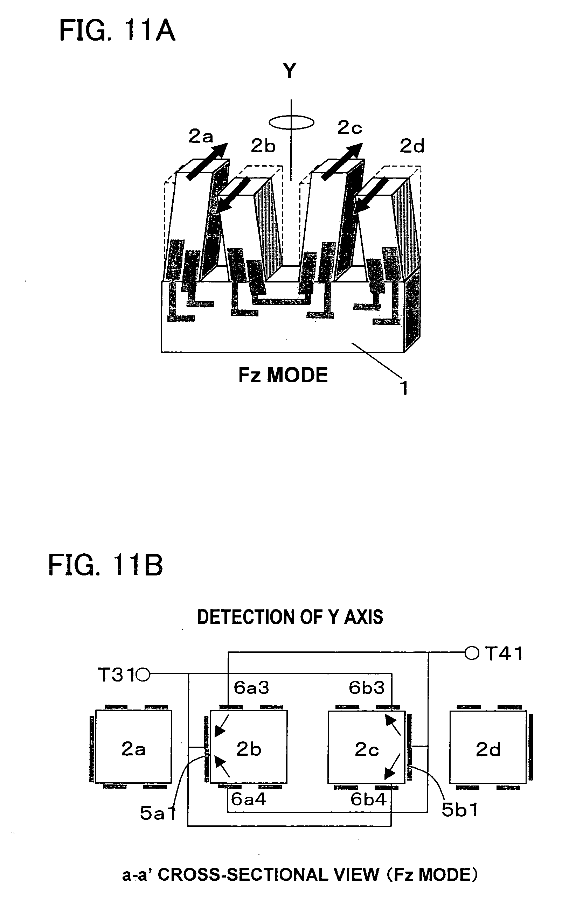

Figs. 11A and 11B are explanatory views of application of a rotational force around the Y-axis in the Fx mode illustrated in Figs. 10A and 10B. In Fig. 11A, if a rotational force is applied around the Y-axis in the Fx mode, the drive beams 2b and 2c and the counterbalance beams 2a and 2d are displaced in the directions indicated by the arrows, that is, in opposite directions in the Z-axis direction, due to Coriolis force. This condition, identical to that illustrated in Fig. 2A, is the Fz mode. Therefore, the detection of the displacements in the Fz mode allows detection of the rotation angle applied around the Y-axis.

To detect the displacements of the drive beams 2b and 2c in the Z-axis direction in the Fz mode, the sensing electrodes are connected in the cross-sectional view along line a-a' of Fig. 11A as illustrated in Fig. 11B.

In Fig. 11B, the electrodes 5a1 and 5b1 are formed on the surfaces of the drive beams 2b and 2c vertical to the X-axis, and the electrodes 6a3, 6a4, 6b3 and 6b4 on the surfaces of the drive beams 2b and 2c vertical to the Z-axis. If the outputs between the electrodes 5a1 and 6a3, and 5a1 and 6a4 and those between the electrodes 5b1 and 6b3, and 5b1 and 6b4 are found from terminals T31 and T41, the displacements in the Fz mode can be detected.

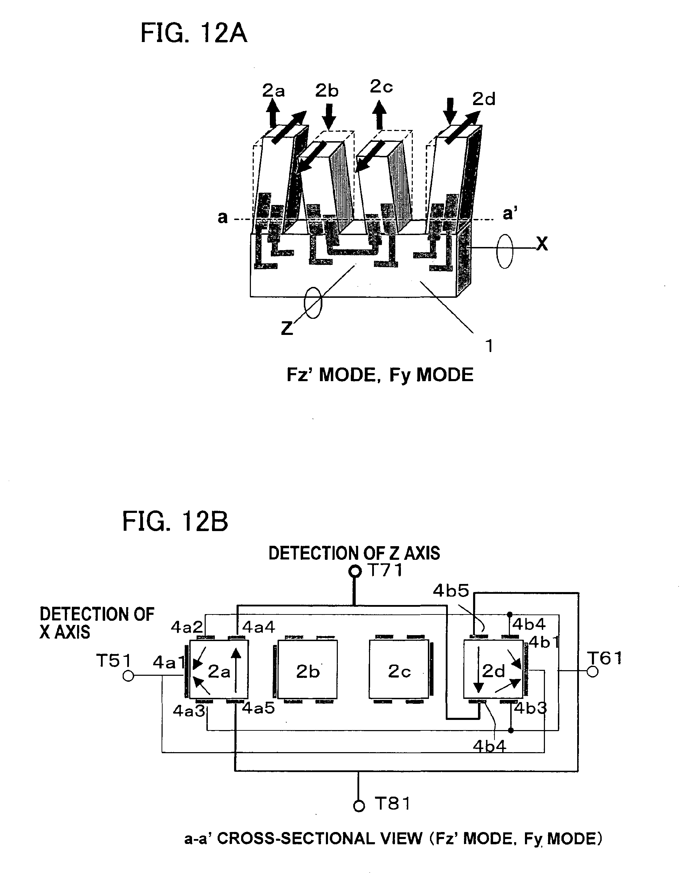

Similarly, Figs. 12A and 12B are explanatory views of application of rotational forces around the X- and Z-axes in the Fx mode illustrated in Figs. 10A and 10B. In Fig. 12A, when a rotational force is applied around the X-axis in the Fx mode, the drive beams 2b and 2c and the counterbalance beams 2a and 2d are displaced in the directions indicated by the arrows, that is, in opposite directions in the Z-axis direction, due to Corioli's force. This condition, identical to that illustrated in Fig. 3A, is the Fz' mode. Therefore, the detection of the displacements in the Fz' mode allows detection of the rotation angle applied around the X-axis.

To detect the displacements of the counterbalance beams 2a and 2d in the Z-axis direction in the Fz' mode, the sensing electrodes are connected in the cross-sectional view along line a-a' of Fig. 12A as illustrated in Fig. 12B.

In Fig. 12B, the electrodes 4a1 and 4b1 are formed on the surfaces of the counterbalance beams 2a and 2d vertical to the X-axis, and the electrodes 4a2, 4a3, 4b2 and 4b3 on the surfaces of the counterbalance beams 2a and 2d vertical to the Z-axis. If the outputs between the electrodes 4a1 and 4a2, and 4a1 and 4a3 and those between the electrodes 4b1 and 4b2, and 4b1 and 4b3 are found from the terminals T51 and T61, the displacements in the Fz' mode can be detected.

Further in Fig. 12A, when a rotational force is applied around the Z-axis, the drive beams 2b and 2c and the counterbalance beams 2a and 2d are displaced in the directions indicated by the up and down arrows, that is, in opposite directions in the Y-axis direction, due to Corioli's force. This condition is defined as the Fy mode.

Therefore, the detection of the displacements in the Fy mode allows detection of the rotation angle applied around the Z-axis.

To detect the displacements of the counterbalance beams 2a and 2d in the Y-axis direction in the Fy mode, the sensing electrodes are connected in the cross-sectional view along line a-a' of Fig. 12A as illustrated in Fig. 12B.

In Fig. 12B, the electrodes 4a4, 4a5, 4b4 and 4b5 are further formed on the surfaces of the counterbalance beams 2a and 2d vertical to the Z-axis. If the output between the electrodes 4a4 and 4a5 and that between the electrodes 4b4 and 4b5 are found from terminals T71 and T81, the displacements in the Fy mode can be detected.

As described above, the fourth embodiment also allows detection of the rotation angles of three axes or the Y-, X- and Z-axes, and therefore, the angular velocities of these axes in the Fz, Fz' and Fy modes with a single element.

Here, the aforementioned embodiments all have a comb-shaped configuration with the beams formed integrally with the base portion 1 and arranged in the X-axis direction.

On the other hand, the present invention is also applicable to a configuration with two beams each arranged on the opposite sides of the base portion 1, that is, an H-shaped configuration.

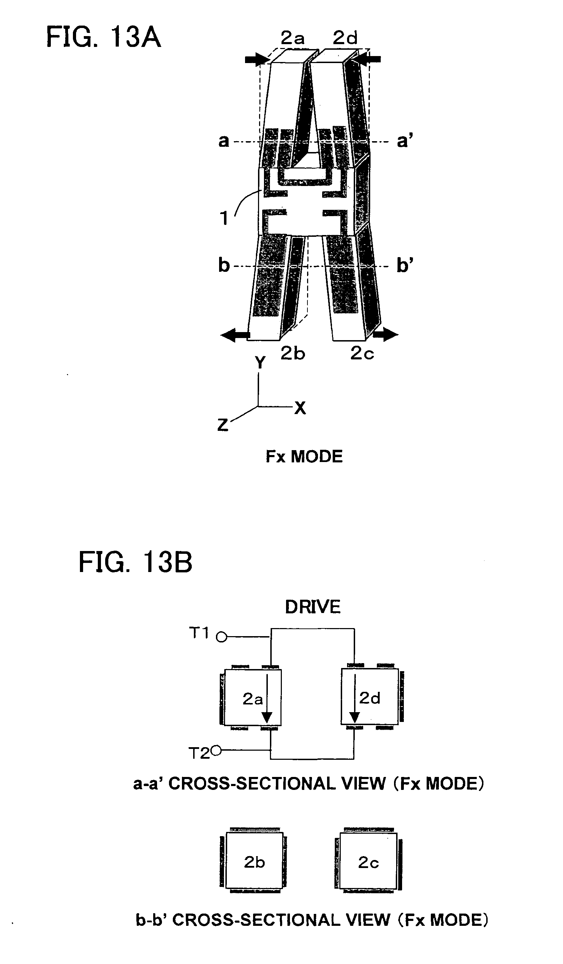

Figs. 13A to 15B are views illustrating an embodiment having such an H-shaped configuration. This embodiment is configured with the drive beams 2a and 2d and the counterbalance beams 2b and 2c arranged on the opposite sides of the base portion 1 as illustrated in Fig. 13A.

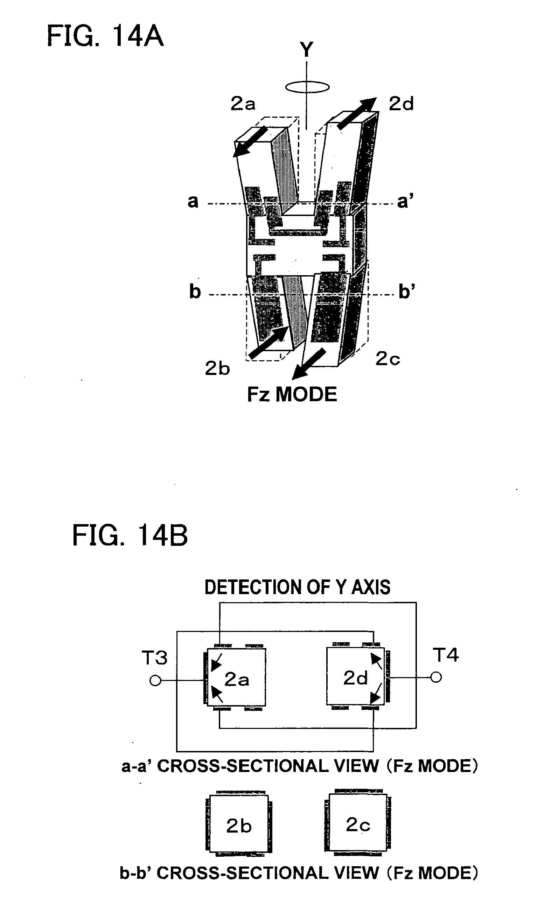

As illustrated in Fig. 13B, a drive signal is supplied between the terminals T1 and T2 to cause excitation in the X-axis direction and, as a result, provide the Fx mode. In Figs. 14A and 14B corresponding to Figs. 2A and 2B, therefore, the angular velocity around the Y-axis can be detected between the terminals T3 and T4, thanks to the Fz mode that causes displacements in the Z-axis direction due to Coriolis force as illustrated in Fig. 14A.

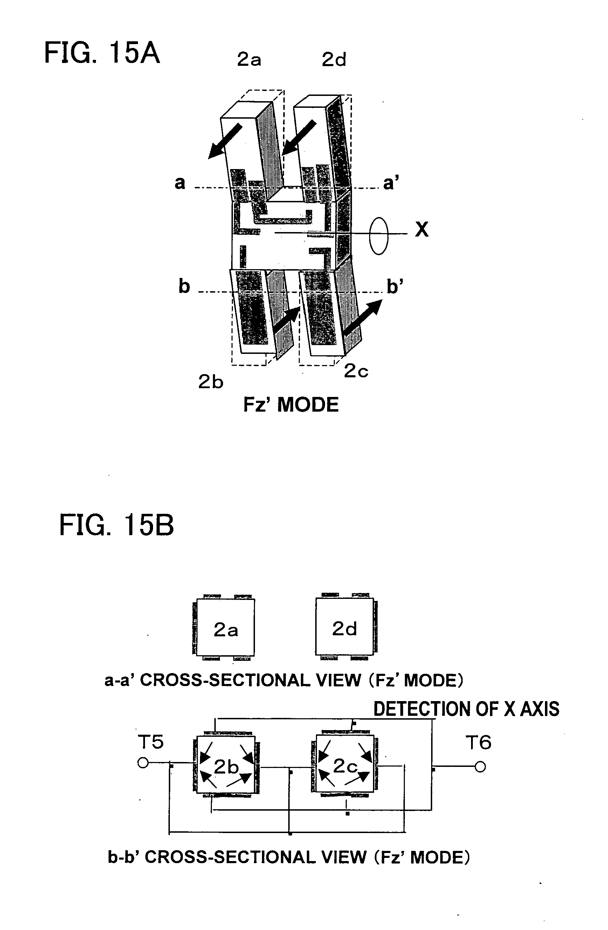

Further, in Figs. 15A and 15B corresponding to Figs. 3A and 3B, the angular velocity around the X-axis can be detected between the terminals T5 and T6, thanks to the Fz' mode that causes displacements in the Z-axis direction due to Coriolis force as illustrated in Fig. 15A.

As described above, the angular velocity sensor with the H-shaped configuration, to which the present invention is applied, can detect the angular velocities of two axes with a single element.

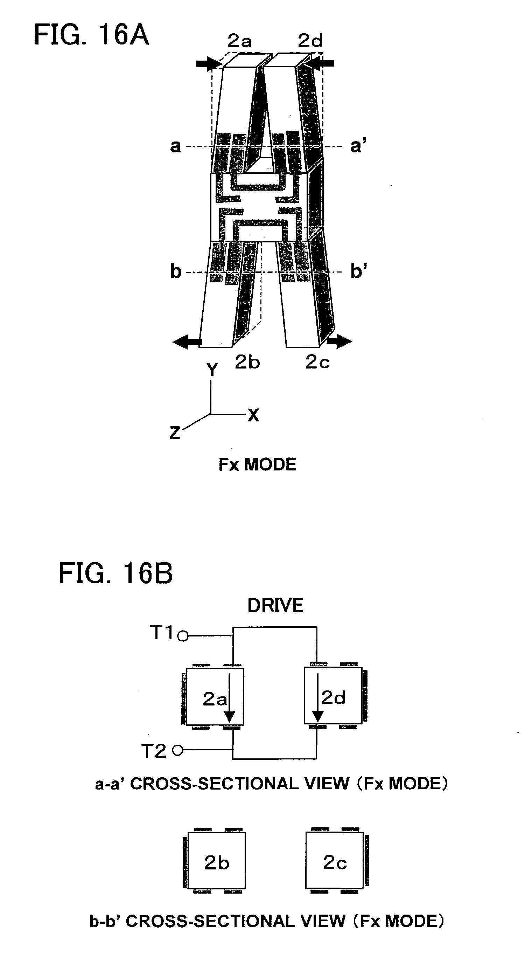

Further, Figs. 16A to 18B are views illustrating another embodiment having an H-shaped configuration that corresponds to the aforementioned third embodiment. Therefore, Figs. 16A to 18B correspond to Figs. 7A to 9B describing the third embodiment. This embodiment is configured with the drive beams 2a and 2d and the counterbalance beams 2b and 2c arranged on the opposite sides of the base portion 1 as illustrated in Fig. 16A.

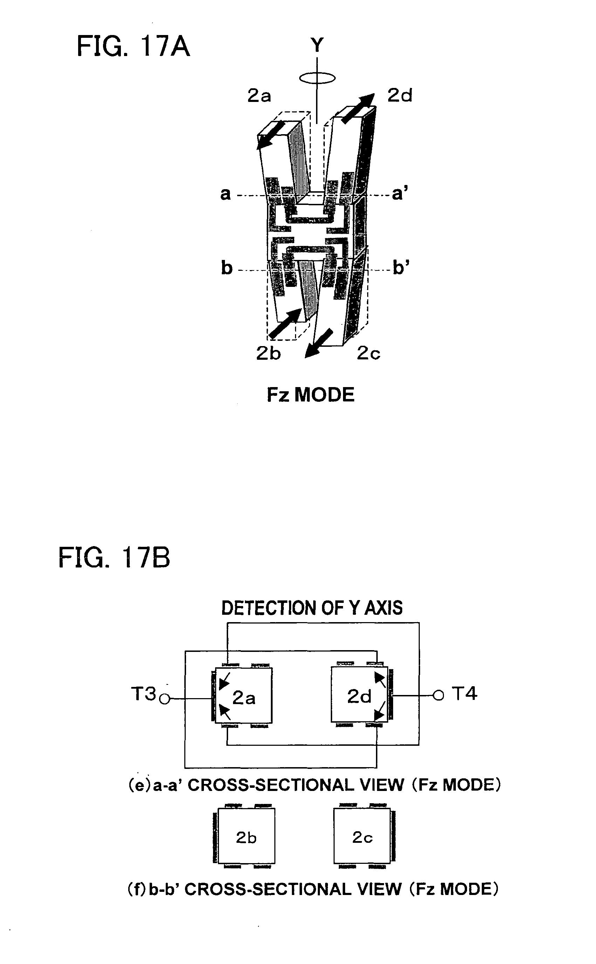

A drive signal is supplied between the terminals T1 and T2 as illustrated in Fig. 16B to cause excitation in the X-axis direction and provide the Fx mode. In Figs. 17A and 17B corresponding to Figs. 8A and 8B, therefore, the angular velocity around the Y-axis can be detected between the terminals T3 and T4, thanks to the Fz mode that causes displacements in the Z-axis direction due to Corioli's force as illustrated in Fig. 17A.

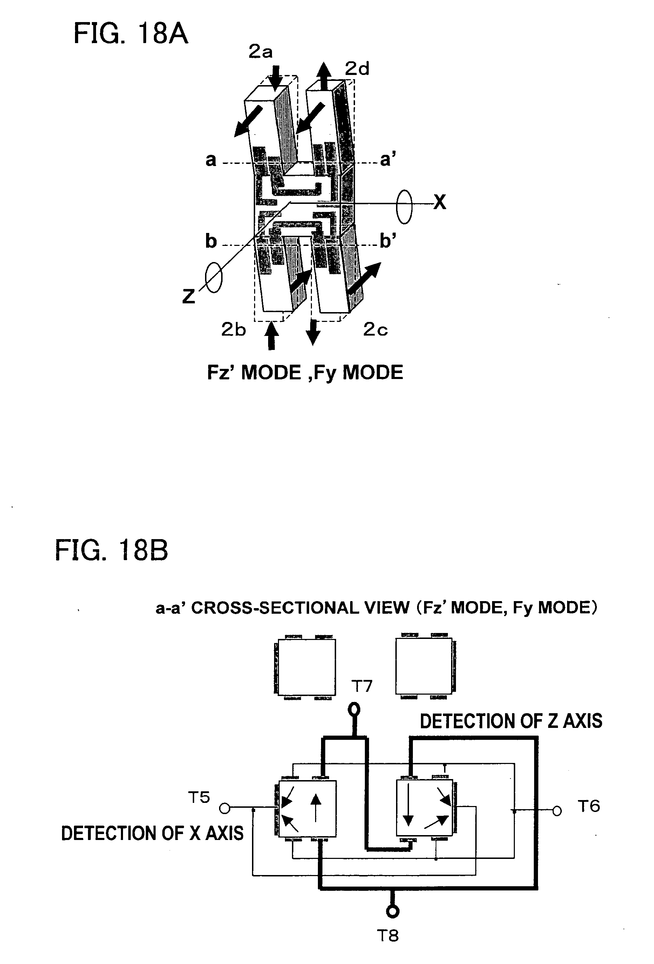

Further, in Figs. 18A and 18B corresponding to Figs. 3A and 3B, the angular velocity around the X-axis can be detected between the terminals T5 and T6, thanks to the Fz' mode that causes displacements in the Z-axis direction due to Coriolis force as illustrated in Fig. 18A.

Still further, in Figs. 18A and 18B, the angular velocity around the Z-axis can be detected between the terminals T7 and T8, thanks to the Fy mode that causes displacements in the Y-axis direction due to Coriolis force as illustrated in Fig. 18A.

As described above, the angular velocity sensor with the H-shaped configuration, to which the present invention is applied, can detect the angular velocities of three axes with a single element.

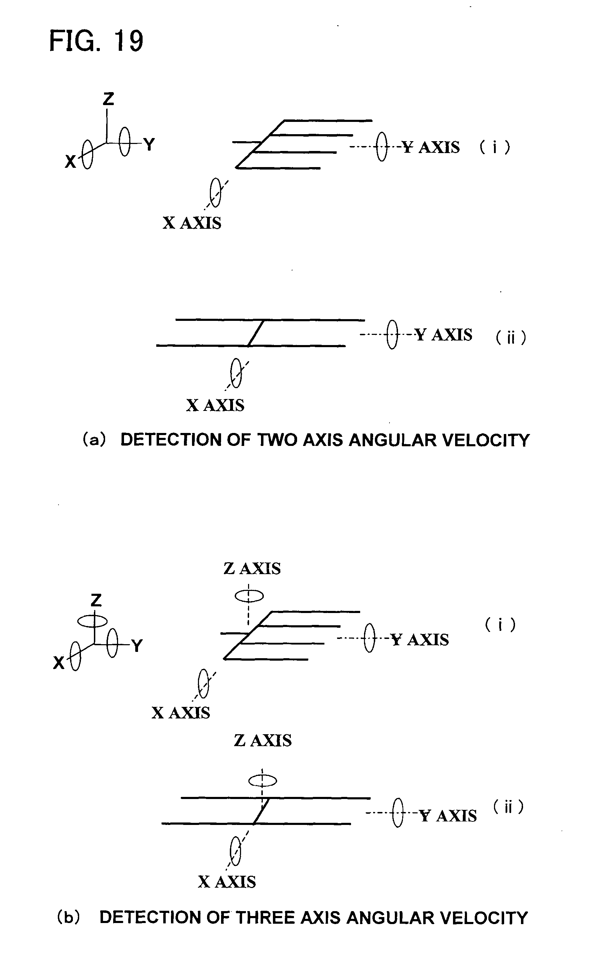

Fig. 19 is a view illustrating how to install the angular velocity sensor according to the present invention. In Fig. 19, (i) and (ii) for case (a) represent the sensor used as a two-axis sensor, whereas (i) and (ii) for case (b) represent the sensor used as a three-axis sensor. In either case, level placement on the XY plane provides a two-axis angular velocity sensor for the X- and Y-axes or a three-axis angular velocity sensor for the X-, Y- and Z-axes that can be reduced in height when packaged.

As described above with reference to the drawings, the present invention can provide an angular velocity sensor that is simple in structure, can be reduced in height and can detect the angular velocities of a plurality of axes with a single element. Therefore, the angular velocity sensor is applicable in a number of areas for downsizing of equipment, thus making a significant contribution to industry.

While illustrative and presently preferred embodiments of the present invention have been described in detail herein, it is to be understood that the inventive concepts may be otherwise variously embodied and employed and that the appended claims are intended to be construed to include such variations except insofar as limited by the prior art.

## Claims

1. An angular velocity sensor comprising:
a base portion formed by a piezoelectric single crystal and having a length in the Y-axis direction and a thickness in the Z-axis direction;
four beams each having a length in the Y-axis direction perpendicular to the X- and Z-axis directions that are arranged side by side in the X-axis direction and formed by the piezoelectric single crystal integrally with the base portion, wherein
the four beams are grouped in two pairs with one in each pair used as a drive beam and the other a counterbalance, wherein
the drive beams are provided with drive electrodes adapted to oscillate the beams in the X-axis direction and Y-axis sensing electrodes adapted to detect the rotation angle applied around the Y-axis, and wherein
the other beams serving as counterbalances are provided with X-axis sensing electrodes adapted to detect the rotation angle applied around the X-axis.

2. The angular velocity sensor of claim 1, wherein
the drive electrodes are electrodes formed on both surfaces of the drive beams perpendicular to the Z-axis direction with a drive signal applied between the drive electrodes, wherein
the Y-axis sensing electrodes are electrodes formed on the surfaces of the drive beams perpendicular to the Z-axis direction separately from the drive electrodes and electrodes formed on the surfaces of the drive beams perpendicular to the X-axis direction so that outputs between these electrodes are detected as the rotation angle applied around the Y-axis, and wherein
the X-axis sensing electrodes are electrodes formed on the surfaces of the other beams serving as counterbalances perpendicular to the Z-axis direction and electrodes formed on both surfaces thereof perpendicular to the X-axis direction so that outputs between these electrodes are detected as the rotation angle applied around the X-axis.

3. The angular velocity sensor of claim 2, wherein
Z-axis sensing electrodes are formed on the both surfaces of the other beams serving as counterbalances perpendicular to the Z-axis direction separately from the X-axis sensing electrodes formed on the both surfaces of the other beams serving as counterbalances perpendicular to the Z-axis direction so that outputs between these electrodes are detected as the rotation angle applied around the Z-axis.

4. The angular velocity sensor of any one of claims 1 to 3, wherein
the four beams are formed on one side of the base portion relative to the Z-axis direction to form a comb shape.

5. The angular velocity sensor of any one of claims 1 to 3, wherein
the two pairs of the four beams are formed so as to face each other in the Z-axis direction with the base portion therebetween to form an H shape.
